# EUROPEAN PATENT APPLICATION

(11) **EP 4 538 585 A1**
(43) Date of publication of application: **16.04.2025**
(21) Application number: 23202311.9
(22) Date of filing: 09.10.2023
(51) Int. Cl.: F17C 13/00

(54) **HYDROGEN STORAGE FACILITY AND USE THEREOF**

(71) Applicant: Tata Steel Nederland Technology B.V., 1951 JZ Velsen-Noord (NL)
(72) Inventor: VAN DER WEIJDE, Dammes, Hans, 1970 CA IJmuiden (NL)
(74) Representative: Group Intellectual Property Services

(57) **Abstract**

This invention relates to a compact facility for storing and releasing hydrogen comprising a tubular container for the storage of compressed gaseous hydrogen, means for compressing the hydrogen and introducing it into the tubular container through one or more inlets, and means for releasing the gaseous hydrogen through one or more outlets and wherein the storage pressure is at most 300 bar.

## Description

### Field of the invention

This invention relates to a facility for storage of hydrogen gas and use of said facility.

### Background of the invention

The large-scale storage of hydrogen plays a fundamental role in a potential future hydrogen economy. Although the storage of gaseous hydrogen in salt caverns already is used on an industrial scale, this approach is not applicable in all regions due to varying geological conditions. Therefore, other storage methods are necessary. Besides that, it may also be beneficial to have a more local storage option available near the hydrogen consumers. The application of certain storage technologies, such as liquid hydrogen, methanol, ammonia, and dibenzyltoluene, is found to be advantageous in terms of storage density, cost of storage, and safety. Storage in chemical bonds is stable for long term but has the disadvantage that a chemical plant, with its related footprint, risks and costs is needed. The variable costs for these high-density storage technologies are largely associated with a high electricity demand for the storage process or with a high heat demand for the hydrogen release process.

With a continuing transition to renewable, intermittent energy sources, such as solar and wind power, it is becoming increasingly clear that new ways of storing electrical energy to balance the supply and demand are needed.

In the steelmaking industry there is a desire to move away from the reduction of iron oxide by means of a carbon-based reducing gas towards the use of hydrogen-based as a reducing gas. This can be done by providing iron oxide in the form of agglomerates to a direct reduction plant (DRP) or to a DRI reactor comprising a direct reduction shaft furnace having a reduction zone and a lower discharge zone from which direct reduced iron in solid form is discharged at a regulated rate by means of a suitable discharge mechanism. Iron oxide pellets, lumps or mixtures thereof are provided to the reduction furnace to form DRI by reaction of the iron oxides with a reducing gas stream at high temperature that is mainly composed of H₂. The DRI in solid form is further processed directly on exit from the discharge zone, and optionally also after being compacted into briquettes, in a melt shop typically comprising one or more electric-arc furnaces (EAF) or submerged-arc furnaces (SAF), in the art also known as a reducing electrical furnace (REF). Certainly in combination with these fully continuous and energy intensive industries like the metal producing industries it is essential that the energy is available on demand.

The storage of hydrogen is challenging. Being the lightest molecule, hydrogen gas has a very low density: 1 kg of hydrogen gas occupies over 11 m³ at room temperature and atmospheric pressure. Thus, for the storage of hydrogen to be economically viable, its storage density must be increased. Several methods to store hydrogen at increased density exist. However, all these methods require some input of energy in the form of work or heat. The goal of the stationary storage of hydrogen is generally either to minimize the cost of delivered hydrogen through the balancing of supply and demand or to use it for backup purposes.

Another issue with green hydrogen is the fact that the wind does not always blow, and the sun does not always shine. So the supply of hydrogen produced by means of the electricity that is generated by wind or solar energy is not constant. This calls for buffering capacity for hydrogen to optimise the balance between production and demand benefits for green hydrogen. It may also be used as a buffering capacity at a local level, for instance during interruptions for maintenance when local demand for hydrogen is lower, but hydrogen supply is available.

At present insufficient amounts of green hydrogen (hydrogen from renewable sources) are available and is expected to remain limited in the near future, to cover the needs of an integrated steel plant. Also there is not yet a stable H₂ infrastructure, which means that the availability of green hydrogen and the desired usage of the hydrogen does not coincide in time. Consequently, there is a need for a facility that is able to store and release hydrogen gas at a moment's notice.

### Objectives of the invention

It is an object of the invention to provide a facility that can store and release hydrogen gas at a moment's notice.

It is also an object of the invention to invention to provide a facility that can store and release large amounts of hydrogen gas at a high efficiency.

It is also an object of the invention to invention to provide a facility that can store and release large amounts of hydrogen gas at low operating costs.

It is also an object of the invention to invention to provide a compact facility that fits in the footprint of a metal producing site.

### Description of the invention

One or more of the objects is reached with a facility for storing and releasing hydrogen comprising one or more tubular containers for the storage of gaseous hydrogen, means for compressing the hydrogen and introducing it into the tubular container through one or more hydrogen inlets, and means for releasing the gaseous hydrogen through one or more hydrogen outlets.

The facility according to the invention has three main components: one or more tubular containers that act as the storage compartments, means for compressing the hydrogen into the containers to achieve the operating storage pressure and means for safe and controlled release of the compressed hydrogen when it is needed. In the context of this invention, when reference is made to hydrogen the gaseous form is meant, unless specifically indicated otherwise.

The low hydrogen density leads to relatively large storage specific volumes, and, thus, relatively high investment costs. However, due to the relative simplicity of the storage facility the operational costs are limited and there are no technical difficulties to be overcome when operating the facility. The energy needed to compress the hydrogen can easily be recovered (recuperated) by suitable recovery means. The compressed gas could for instance be used to power a generator to generate electricity or a compressor to compress other gases. The hydrogen is stored as a gas and released as a gas when needed. Here the invention is clearly distinguishable from alternative and significantly more complex and expensive storage options for hydrogen such as storage of liquid hydrogen, storage by adsorption of the hydrogen onto or into a material held by a van der Waals bond or chemically bonded as a metal hydride or an intermetallic hydride.

The advantage of the facility according to the invention to contain the stored gas in a container is that it is stable, the purity of stored hydrogen is safeguarded, and it can be applied independently of location. If the vessel material and construction determine the structural integrity and the maximum allowable storage pressure, there is no advantage in underground storage. However for space considerations, protection against physical impact and weather, or the insulating effect it may be advantageous to locate the facility according to the invention underground. On the other hand, inspection of the storage system becomes more cumbersome and care must be taken to protect the installation against corrosion, for example via the use of external coatings.

For natural gas there is ample experience with large-scale storage. Three main types of metallic vessels are currently used for the storage of larger amounts of natural gas: 1. gas holders, with storage pressures slightly above atmospheric pressure; 2. spherical pressure vessels, with maximum storage pressures up to approximately 20 bar; 3. pipe storages, with maximum storage pressures of approximately 100 bar. Pipe storages have been applied for the storage of natural gas since the 1980s, mainly to manage peaks in demand for storage facilities with limited access to a natural gas grid. The construction of a pipe storage is relatively simple: a series of relatively short pipelines are laid down with sealed ends and diameters ranging up to around 1.4 m. The total length of pipeline may be several kilometres, usually positioned a couple of meters underground.

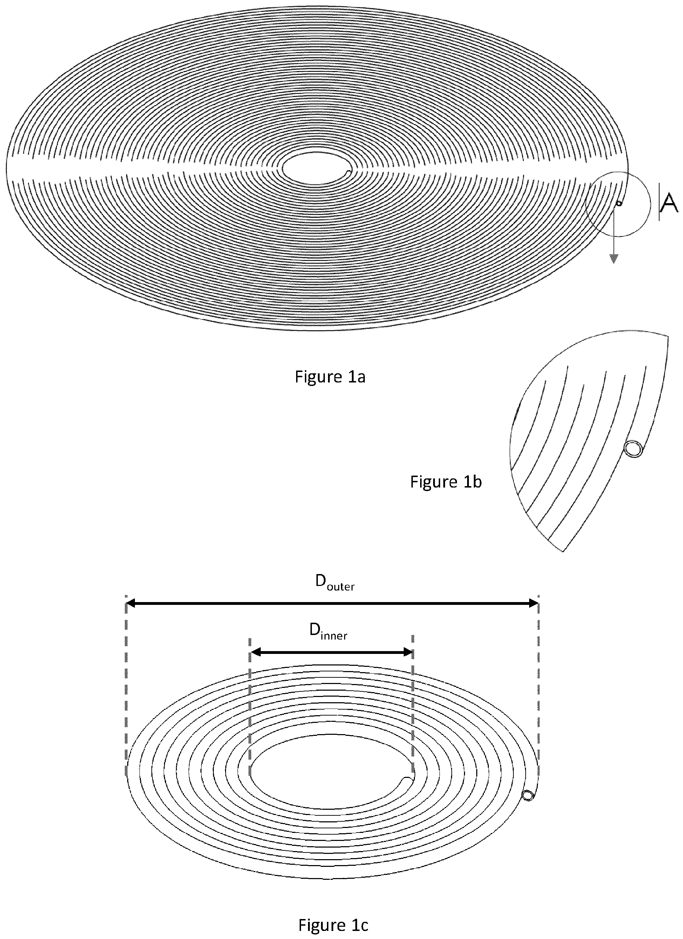

The facility according to the invention is a compact facility, optionally comparable in size to conventional gas holders for coke-oven gas or converter-gas from a conventional basic oxygen steel plant (BOS-plant). A facility of this size can be easily integrated on a site of a conventional metal producing works such as an integrated iron and steel works or on any other sizeable industrial park. An alternative could be to use one or more spiral tubes having a large outer diameter (Dₒᵤₜₑᵣ), e.g. 100 m, which could be located underground, e.g. under a field. The field could then, for instance, be used for another purpose or landscaping. In the context of this invention a spiral tube is a tube in a spiral form (see e.g. figure 1a or 1c).

The hydrogen gas is stored in the facility under pressure to be able to store large amounts of hydrogen gas in a relatively small volume. The transport to and from the facility to the unit where the hydrogen gas is produced respectively to be used does not necessarily have to be under the same high pressure, and the tubes for the transport of the hydrogen may therefore differ from those in the storage facility. The ancillary equipment and methods needed to transport hydrogen to and from the facility are known in the art.

In an embodiment the tubular container comprises one or more coiled tubes, one or more spiral tubes, or one or more folded tubes, or a combination thereof.

The spiral tube or the folded tube is preferably constructed in the horizontal plane because this is technically the simplest orientation. This spiral tube or folded tube in the horizontal plane is referred to as a pancake in the context of this invention.

In the context of this invention a spiral tube is a tube in a spiral form. One open end of the tube is at the outer perimeter of the spiral whereas the other open end is at the centre of the spiral. In its simplest form a valve is mounted at either end of the tube. One such spiral tube, which has an outer diameter Dₒᵤₜₑᵣ, is referred to as a pancake. By stacking these pancakes and connecting the open ends of the pancakes a tubular container may be constructed. Alternatively, the tube may be laid down as a spiral tube and a second (and subsequent pancake) may be immediately coiled on top of the previous pancake, optionally with a supporting structure in between, but then in the opposite direction, so that there is no need to connect the individual pancakes together. This way the individual pancakes do not need to be connected.

A folded tube can for instance be used if the ground surface for the tubular container is not cylindrical. By folding the tube a (for instance) rectangular ground surface can be effectively covered.

So by means of such a spiral tube or a folded tube a specific surface (circular, rectangular, or otherwise in ground surface) can be completely covered by the tubular container. There only needs to be some clearance between neighbouring tubes to account for thermal expansion and expansion as a result of the pressurising of the tubes. A spiral tube is a suitable shape because of the absence of sharp corners in the tube. The radius of curvature of the tube increases as the diameter of the spiral increases. In an embodiment the centre of the spiral is left free from tubes (Dᵢₙₙₑᵣ>0) so that the connections to the means for compressing the hydrogen and the means for releasing the hydrogen are easily accessible. It is preferable that when a folded tube is used as the tubular container that an opening is left at a convenient location, free from folded tubes, so that the connections to the means for compressing the hydrogen and the means for releasing the hydrogen are easily accessible.

In an embodiment the tubular container comprises a plurality of spiral or folded tubes (pancakes), wherein the individual pancakes are stacked, optionally wherein a separator is used between the pancakes to improve stackability and stability of the stack. The tubular container of this embodiment can therefore be considered as a stack of pancakes optionally, separated by a separator, preferably a rigid separator or a shelf structure for each pancake. This separator prevents sagging or shifting if a plurality of pancakes is stacked. A shelf structure or support structure enables, if so desired, a spacing between subsequent pancakes so that subsequent spiral tubes or folded tubes do not touch each other.

In an embodiment the plurality of coiled or spiral or folded tubes is divided into segments wherein each segment consists of a plurality consisting of spiral or folded tubes and wherein each segment is provided with a hydrogen inlet and a hydrogen outlet. For instance, two or more pancakes could be provided with only one inlet and/or outlet. This reduces the number of connections that have to be made. On the other hand, it is also possible that each pancake is provided with an inlet and an outlet. In practice the inlet and the outlet could be the same device, in which case the valve acts as an outlet and as an inlet.

The same applies to coiled tubes. A coiled tube is produced by winding the tube around a permanent or temporary spindle for a until a certain width of the spool is reached to provide a first layer of coiled tube, and then the next layer will be wound around that first layer of coiled tube in the opposite direction (or the same direction, but then connectors are needed between each subsequent layer) and so on until the required number of layers is reached. In this case each layer of the tubular container has a helical shape. The axial hole can be used for connections and auxiliary hardware.

The tubular coils can be positioned "eye-to-the-sky", i.e. the tube loops are more or less horizontal and the axial hole points to the sky, or perpendicular thereto, i.e. the tube loops are more or less vertical. The term "more or less" reflects the fact that a coiled tube has a pitch that may not be completely constant when the coil consists of more than one layer of tube, because then there must be a to-and-fro of tube loops going first from right to left and the second layer has to go from left to right, thereby reversing the pitch v.v. From a mechanistic perspective, the eye-to-the-sky orientation is favourable. The coils can be wound free-standing, or on a spool with rims onto which the coiled tube may rest if the spool is used eye-to the sky. By stacking and linking several spools together a cylindrical container comparable to the classical gas holder may be filled. This way the spool rims act as separator that can also be used to support the spools. The spool rims acting as a separator prevent sagging or shifting if a plurality of spools is stacked. A shelf structure or support structure enables, if so desired, a spacing between subsequent spools.

The hydrogen is stored under pressure, the exact height depending on the amount of hydrogen stored and the volume of the tubular container in use. The act of pressurising required energy to power the compressors. This energy can, at least partly, be recovered (recuperated) upon release of the pressurised hydrogen using recovery means. This enables an economic operation of the facility. The maximum operational storage pressure is limited by the maximum allowable operating pressure of the tubes, valves and other ancillary equipment used to construct the facility. With the term operational storage pressure the pressure is meant at which hydrogen is normally stored. Off course if the facility is nearly depleted or in just being filled, the pressure may temporarily be lower, but this is not the preferred pressure, because the storage capacity of hydrogen under these low pressures is very low. The operational pressure will vary depending on the status of filling and using the hydrogen in the facility, but the operational pressure is preferably between 5 and 400 bar. The higher the operating pressure, the more hydrogen can be stored in a given volume, and the more compact the facility for the storage and release of hydrogen gas can be made.

A suitable maximum operating pressure is 300 bar, preferably at most 250 bar.

In an embodiment the operational storage pressure is at least 10 bar, preferably at least 50 bar, more preferably at least 100 bar.

A preferred range for the operating pressure is between 125 and 200 bar, more preferably between 125 and 175 bar.

The compressors to compress the hydrogen in the tubular container may be electrically powered, or powered by means of a fuel cell, preferably a hydrogen fuel cell.

In an embodiment the facility according to the invention comprises one or more of a tubular container, such as a coiled tube, spiral tube, or folded tube, wherein the tubes are made from metal such as carbon steel, low-carbon steel, stainless steel, aluminium or from fibre reinformed polymer tubes, more in particular of fibre reinforced thermoplastic tube. The advantage of the fibre reinforced tubes is that they are relatively flexible and are already suppliable as long lengths on a coil. Their impermeability for hydrogen is usually provided by an additional layer in the tube.

A suitable internal diameter of the tubes for the tubular container is at most 35, preferably at most 30 cm. This diameter still allows a reasonable flexibility and bendability of a tube. There is a balance between handleability and storage capacity, but also the ability of the tube to deal with he high maximum operating pressure in the tubular container. A suitable balance of the above requirements for the internal diameter of the tubes results in a range of between 15 and 25 cm. In an embodiment the internal diameter of the coiled, spiral, or folded tube is between 15 and 25 cm. The external diameter of the tube depends on the material of which the tube is made, and the nature and thickness of the additional functional layers around the tube.

Examples of flexible tubes for hydrogen transport are known in the art, e.g. from EP2851190-A1 in which a ½" tube is tested for use as a tube for transport of hydrogen to a hydrogen fuel battery or fuel cell. The tube comprises a polyamide-based inner layer and a separate polyurethane layer surrounding the inner layer to prevent the permeation of hydrogen. Protective layers may be provided to prevent damage to the tubes during installation and use. Long lengths of flexible thermoplastic tubes are promoted by companies such as Strohm for transport of "green" hydrogen produced by offshore windfarms.

Although there is no principal limitation to the diameter of the individual spiral tube or the size of the folded tube, there is a practical limitation in view of ground space. Typical conventional gas holders go up to a diameter of about 60 m. So a suitable maximum diameter of a spiral tube is 60 m. In an embodiment of the claimed invention the spiral tube consists of a steel tube wherein the spiral tube has an outer diameter (Dₒᵤₜₑᵣ) of between 20 to 60 m, preferably between 22 to 50 m, more preferably between 24 to 40 m. Stacking these spiral tubes in the form of a gas holder therefore results in a facility comprising a stack of spiral tubes (pancakes) of an outer diameter (Dₒᵤₜₑᵣ) of between 20 to 60 m, preferably between 22 to 50 m, more preferably between 24 to 40 m. If the ancillary equipment such as valves and tubing is installed in the centre of the spiral tube (i.e. the inner diameter (Dᵢₙₙₑᵣ) has to be sufficiently large), then the outer diameter of the facility is also about Dₒᵤₜₑᵣ depending on the amount of additional space needed on the outer perimeter of the stack of spiral tubes.

In an embodiment the facility according to the invention comprises one or more spiral tubes consists of a steel tube wherein the spiral tube has an outer diameter (Dₒᵤₜₑᵣ) of between 20 to 60 m or one or more spiral tubes consisting of a fibre reinforced polymer tube wherein the spiral tube has an outer diameter (Dₒᵤₜₑᵣ) of between 20 to 60 m. Preferable outer diameters for the spiral tubes are between 22 to 50 m, more preferably between 24 to 40 m.

According to a second aspect the facility according to the invention is used in an iron or steel production facility to buffer hydrogen to be used in the iron or steelmaking process.

### Example

A pancake of a spiral tube is made using a tube with an internal diameter of 190 mm and an external diameter of 250 mm. The inner diameter (Dᵢₙₙₑᵣ) of the spiral tube (pancake) is 3 m and the outer diameter is 30 m. The spiral tube is laid such that there is sufficient breathing space between the subsequent loops to enable some expansion of the tube while being pressurised. To produce the pancake 53 revolutions of the tube are needed 2747 m of tube). This results in a volume in the tube of 78 m³.

Filling a classical gasholder to a height of 30 meter with these pancakes means that there is room for 120 pancakes. This results in a volume of 9360 m³. At a medium operating pressure of 150 bar and a temperature of 20 °C this results in a storage capacity of about 115 tons of Hz.

For a typically sized DRP about 800 ton/day of hydrogen is needed to produce DRI. A storage capacity of 115 tons of hydrogen then gives a buffering capacity of about 4 hours full production.

### Brief description of the drawings

The invention will now be explained by means of the following, non-limiting figures.
Figure 1 shows a schematic drawing of a spiral tube (pancake) having an internal diameter of 190 mm and an external diameter of about 250 mm. The diameter of the hole in the middle , Dᵢₙₙₑᵣ, is 3 m. The outer diameter, Dₒᵤₜₑᵣ, is 30 m. The entire spiral tube consists of 53 revolutions and a total tube length of 2.7 km. This results in a volume of 78 m³ per spiral tube. Figure 1b shows a detail of one end of the spiral tube. Figure 1c shows a shorter tube (8 m) and illustrates the definition of the inner (Dᵢₙₙₑᵣ) and outer (Dₒᵤₜₑᵣ) diameter.

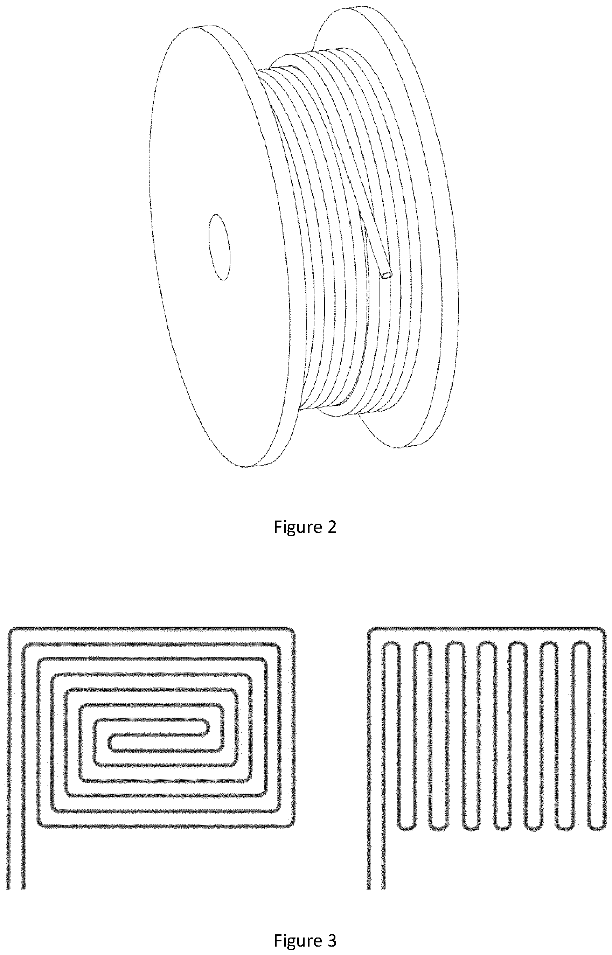

Figure 2 shows a coiled tube. In this example the tube is coiled on a spindle with a core and rims. This prevents sagging and collapse of the coiled tube. The size and width of the spindle and rims is a design option and the choices define the storage capacity of the coiled tube.
Figure 3 shows two examples of folded tubes. This way of folding can be used to cover a rectangular ground space. The tubes have to be able to make relatively sharp corners, compared to the spiral tube and the coiled tube.

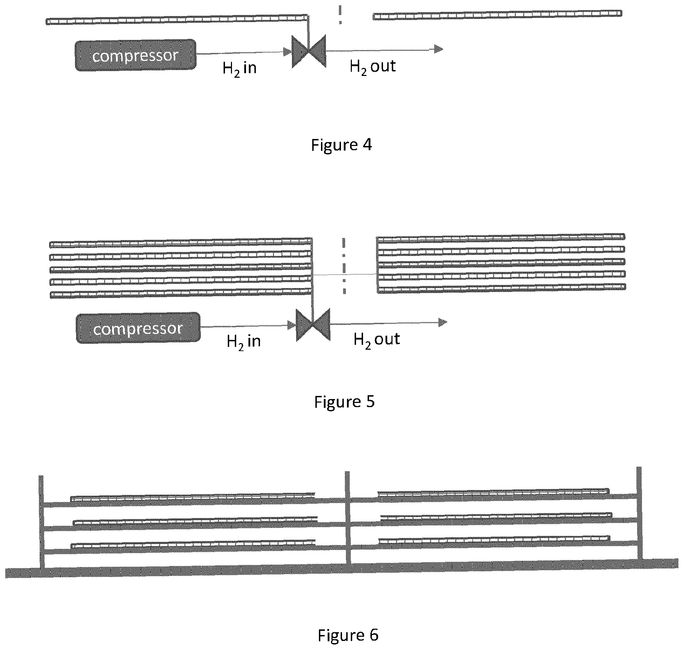

Figure 4 shows a cross section of a single pancake provided with an inlet/outlet/valve combination. The compressor is also shown. The optional energy recuperation unit is not shown.
Figure 5 shows a compartment comprising five pancakes which are combined to form one gas storage module. Ancillary equipment like valves, compressors, recuperators, connecting pipes, etc. is not shown.
Figure 6 shows three pancakes with a support structure to prevent sagging of the spiral tube. The spacing between the pancakes is exaggerated for clarity. In figure 5 the optional support structure is not shown. Ancillary equipment is not shown.

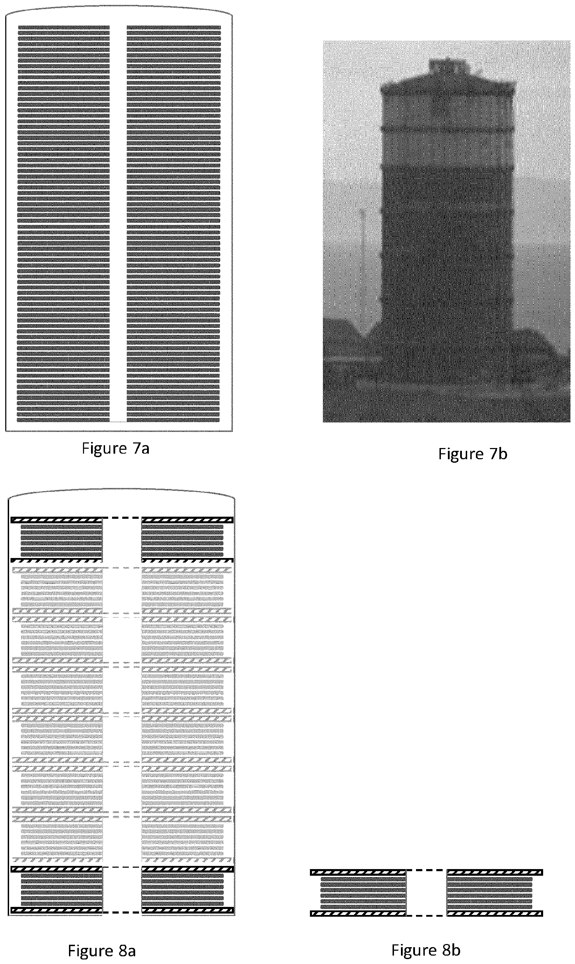

Figure 7 shows a cylindrical gas holder filed with spiral tubes (a) alongside a conventional coke gas holder (b). Ancillary equipment is not shown.
Figure 8a shows a cylindrical gas holder filed with eye-to-the-sky coiled tubes, and figure 8b is one eye-to-the-sky oriented coiled tube on a spindle with rims. Ancillary equipment is not shown.

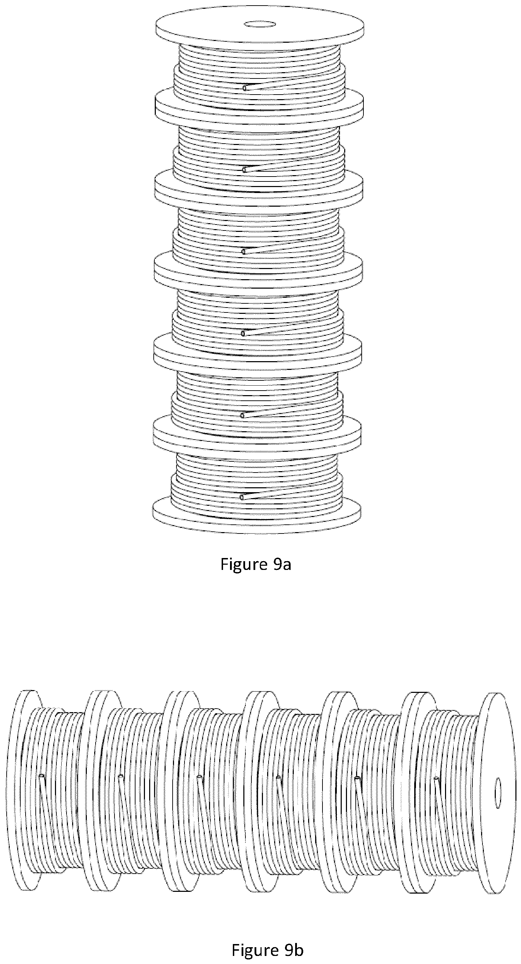

Figure 9a shows a plurality (in casu 6) of coiled tubes in eye-to-the-sky orientation (a) and eye-to-the-horizon orientation (b). Ancillary equipment is not shown.

## Claims

1. A facility for storing and releasing hydrogen comprising a tubular container for the storage of compressed gaseous hydrogen, means for compressing the hydrogen and introducing it into the tubular container through one or more inlets, and means for releasing the gaseous hydrogen through one or more outlets and wherein the storage pressure is at most 300 bar.

2. The facility according to claim 1 wherein the tubular container comprises a coiled tube, a spiral tube, or a folded tube.

3. The facility according to claim 1 or 2 wherein the tubular container comprises a plurality spiral or folded tubes, wherein the individual spiral tubes or folded tubes are stacked, optionally wherein a separator is used between the stacks to improve stackability and stability of the stack.

4. The facility according to claim 1 or 2 wherein the tubular container comprises a plurality of coiled tubes.

5. The facility according to claim 3 or 4 wherein the plurality of coiled tubes, spiral tubes or folded tubes is divided into two or more segments wherein each compartment consists of a plurality of coiled tubes, spiral tubes, or folded tubes and wherein each segment is provided with a hydrogen inlet and a hydrogen outlet.

6. The facility according to any one of claims 1 to 4 wherein each coiled, spiral, or folded tube is provided with a hydrogen inlet and a hydrogen outlet.

7. The facility according to any one of claims 1 to 5 provided with recovery means for recovering the compressive energy from the stored hydrogen upon release of the hydrogen through the one or more hydrogen outlets.

8. The facility according to any one of claims 1 to 6 wherein the tubular container is made from carbon steel, low-carbon steel, stainless steel, aluminium, or fibre reinforced thermoplastic tube.

9. The facility according to any one of claims 1 to 7 wherein the internal diameter of the coiled, spiral, or folded tube is between 15 and 25 cm.

10. The facility according to any one of claims 1 to 8 wherein a spiral tube consists of a steel tube wherein the spiral tube has an outer diameter (Dₒᵤₜₑᵣ) of between 20 to 60 m.

11. The facility according to any one of claims 1 to 8 wherein a spiral tube consists of a fibre reinforced polymer tube wherein the spiral tube has an outer diameter (Dₒᵤₜₑᵣ) of between 20 to 60 m.

12. The facility according to any one of claims 1 to 8 wherein the tubular container comprises one or more coiled tubes and wherein the tubes are metal or fibre reinforced polymer tubes.

13. The facility according to any one of claims 1 to 12 wherein the storage pressure is at least 10 bar, preferably at least 50 bar, more preferably at least 100 bar.

14. The facility according to any one of claims 1 to 13 wherein the storage pressure is between 125 and 200 bar.

15. Use of the facility according to any one of the preceding claims in iron or steel production.
